# EUROPÄISCHE PATENTSCHRIFT

(11) **EP 2 983 914 B1**
(45) Veröffentlichungstag und Bekanntmachung des Hinweises auf die Patenterteilung: **10.05.2017**
(21) Anmeldenummer: 14714172.5
(22) Anmeldetag: 27.03.2014
(51) Int. Cl.: B32B 37/00, E04F 15/10, B32B 38/00

(54) **VERFAHREN ZUM HERSTELLEN EINES EINE DEKORSCHICHT AUFWEISENDEN ELASTOMER-BODENBELAGS UND ELASTOMER-BODENBELAG MIT EINER DEKORSCHICHT**
METHOD FOR PRODUCING AN ELASTOMER FLOOR COVERING HAVING A DECORATIVE LAYER AND AN ELASTOMER FLOOR COVERING WITH A DECORATIVE LAYER
PROCÉDÉ PERMETTANT DE FABRIQUER UN REVÊTEMENT DE SOL EN ÉLASTOMÈRE PRÉSENTANT UNE COUCHE DÉCORATIVE ET REVÊTEMENT DE SOL EN ÉLASTOMÈRE POURVU D'UNE COUCHE DÉCORATIVE

(30) Priorität: 11.04.2013 DE 102013103663
(43) Veröffentlichungstag der Anmeldung: 17.02.2016
(73) Patentinhaber: Nora Systems GmbH, 69469 Weinheim (DE)
(72) Erfinder: RISCHER, Dieter, 69518 Abtsteinach (DE); KRÖGER, Mario, 76646 Bruchsal (DE)
(74) Vertreter: Reiser & Partner
(86) Internationale Anmeldenummer: PCT/EP2014/000825
(87) Internationale Veröffentlichungsnummer: WO 2014/166597

(56) Entgegenhaltungen:
- EP-A1- 1 930 152
- DE-A1-102010 036 120
- FR-A1- 2 951 454
- US-A- 5 281 290

## Beschreibung

Die Erfindung betrifft ein Verfahren zum Herstellen eines Elastomer-Bodenbelags mit einer Dekorschicht.

Elastomer-Bodenbeläge sind bekannt. Sie werden als hochwertige Bodenbeläge in Gebäuden eingesetzt. Aufgrund ihrer vorteilhaften Eigenschaften werden Elastomer-Bodenbeläge insbesondere im Objekt-Bereich geschätzt. Sie bieten darüber hinaus eine große Vielfalt an Farb-, Design- und Oberflächenvarianten.

Die DE 199 15 729 A1 beschreibt einen Elastomer-Bodenbelag, dessen Oberseite eine Dekorfläche bildet. Hierbei sind in die Gummibahn des Bodenbelags Dekorteilchen derart eingebettet, dass die Dekorteilchen von der Oberseite her sichtbar sind. Die DE 195 07 113 C1 beschreibt einen moirierten Elastomer-Bodenbelag aus zwei oder drei Grundfarben. Die EP 1 475 490 A1 beschreibt einen Elastomer-Bodenbelag mit einer strukturierten Oberfläche. Die DE 10 2010 036 122 A1 beschreibt einen Elastomer-Bodenbelag, bei dem die Matrix mit Partikeln aus einem thermoplastischen Material versehen ist.

Die EP 1 930 152 A1 beschreibt ein Verfahren zur Herstellung eines Laminates. Dieses umfasst eine Schicht aus einem Kunstharz mit geringer Luftdurchlässigkeit, eine Schicht aus einem thermoplastischen Kunstharz und eine Schicht mit einer Gummi-Zusammensetzung. Das Laminat wird in einem Reifen verwendet, um die Luftdurchlässigkeit zu reduzieren.

Die DE 10 2010 036 120 A1 beschreibt einen Bodenbelag mit zwei Lagen. Eine erste Lage ist aus einem elastomeren Material gebildet. Die zweite Lage umfasst einen Polyurethan-Schaum, in den ein Latentwärmespeicher eingebunden ist.

Die Erfindung stellt sich die Aufgabe, ein Verfahren zur Herstellung eines Bodenbelags anzugeben, welches erweiterte gestalterische Möglichkeiten bietet. Darüber hinaus ist Aufgabe der Erfindung, einen Bodenbelag mit einer Dekorschicht anzugeben.

Die Aufgabe wird gelöst durch ein Verfahren zum Herstellen eines eine Dekorschicht aufweisenden Elastomer-Bodenbelags, umfassend folgende Schritte:
- Bereitstellen einer ersten Kautschukmischung;
- Bereitstellen eines Dekor-Trägermaterials, das bereichsweise mit einer Dekorschicht versehen ist, wobei die Dekorschicht eine zweite Kautschukmischung enthält;
- Formgeben der ersten Kautschukmischung durch Überführen in ein Kautschuk-Flächengebilde;
- Aufbringen des mit der Dekorschicht versehenen Dekor-Trägermaterials auf das Kautschuk-Flächengebilde, wobei die Dekorschicht mit dem Kautschuk-Flächengebilde in Berührung kommt;
- Vulkanisieren des Kautschuk-Flächengebildes und der darauf aufgebrachten Dekorschicht, wobei sich die Dekorschicht mit dem Kautschuk-Flächengebilde verbindet;
- Entfernen des Dekor-Trägermaterials.

Auf diese Weise kann die Oberfläche des Elastomer-Bodenbelags besonders attraktiv gestaltet werden. Möglich sind eine nahezu unbegrenzte Vielzahl von grafischen Gestaltungen, sowohl für die Form als auch die Farbe der Dekorschicht. Das Dekor-Trägermaterial mit der Dekorschicht kann dabei problemlos vorfabriziert und vorgehalten werden. Zudem kann die Herstellung des Dekor-Trägermaterials und der Dekorschicht zeitlich und/oder räumlich unabhängig von der Herstellung des Kautschukflächengebildes erfolgen. Auf diese Weise wird die Herstellung des Bodenbelages vereinfacht und die Herstellungskosten werden gering gehalten. Die vorteilhaften Eigenschaften des Elastomer-Bodenbelags können in vollem Umfang erhalten werden. Nachteile bei der Qualität können vermieden werden.

Die erste Kautschukmischung kann beispielsweise in einem Mischer erzeugt und nach Durchführen des Mischvorgangs bereitgestellt werden. Das Formgeben der ersten Kautschukmischung durch Überführen in ein Kautschuk-Flächengebilde kann vorteilhafter Weise durch Walzen, z.B. durch Kalanderwalzen erfolgen. Auf diese Weise kann das Kautschuk-Flächengebilde beispielsweise als Kautschukbahn ausgebildet sein. Die Kautschukbahn kann dann entweder als Bahn weiterverarbeitet werden, oder sie wird in Abschnitte begrenzter Länge unterteilt, welche nach dem Vulkanisieren Elastomer-Bodenbelagsplatten oder Bodenbelagsfliesen bilden. Das Vulkanisieren des Kautschuk-Flächengebildes kann im Falle der Kautschuk-Bahn in einer kontinuierlichen Vulkanisationsanlage, z.B. AUMA (automatische Vulkanisationsmaschine) erfolgen. Im Falle von Abschnitten begrenzter Länge kann die Vulkanisation in einer Presse erfolgen.

Vorteilhafte Ausgestaltungen der Erfindung sind in den Unteransprüchen angegeben.

Nach einer besonders vorteilhaften Ausgestaltung der Erfindung ist vorgesehen, dass die erste Kautschukmischung und die zweite Kautschukmischung wenigstens ein übereinstimmendes Kautschuk-Polymer aufweisen. Auf diese Weise wird u. a. die Verarbeitbarkeit verbessert. Zudem kann nach dem Vulkanisieren ein besonders sicherer und dauerhafter Halt der Dekorschicht an dem vulkanisierten Kautschuk-Flächengebilde erreicht werden. Eine weitere Verbesserung wird dann erreicht, wenn die erste Kautschukmischung und die zweite Kautschukmischung dieselben Kautschuk-Polymere aufweisen.

Eine besonders vorteilhafte Ausgestaltung der Erfindung sieht vor, dass die Dekorschicht vorab auf das bereitgestellte Dekor-Trägermaterial aufgedruckt wurde. Hierbei hat sich besonders bewährt, wenn das Aufdrucken durch Siebdruck erfolgt. Im Wege des Aufdruckens können besonders einfach und kostengünstig unterschiedliche grafische Gestaltungen der Dekorschicht realisiert werden.

Weiterhin kann vorteilhafter Weise vorgesehen sein, dass das bereitgestellte Dekor-Trägermaterial mit der Dekorschicht hergestellt wurde durch:
- Bereitstellen eines insb. bahnenförmigen Dekor-Trägermaterials;
- Bereitstellen der zweiten Kautschukmischung für die Dekorschicht;
- Bereitstellen wenigstens einer konturierte Ausnehmungen aufweisenden ersten Schablone, wobei die erste Schablone eine begrenzte Länge aufweist;
- Auflegen der ersten Schablone auf das Dekor-Trägermaterial und Aufbringen der zweiten Kautschukmischung auf das Dekor-Trägermaterial durch die Ausnehmungen der ersten Schablone zur Bildung eines ersten Abschnittes des Dekorschicht;
- Vorschub des Trägermaterials;
- Erneutes Auflegen der ersten Schablone oder Auflegen einer konturierte Ausnehmungen aufweisenden zweiten Schablone mit einer begrenzten Länge auf das Dekor-Trägermaterial, und Aufbringen der zweiten Kautschukmischung oder einer zusätzlich bereitgestellten dritten Kautschukmischung auf das Dekor-Trägermaterial durch die Ausnehmungen der ersten Schablone bzw. der zweiten Schablone zur Bildung eines zweiten Abschnittes der Dekorschicht.

Diese Maßnahmen ermöglichen u.a. eine hochwertige und kostengünstige Herstellung. Unter Verwendung der ersten Schablone kann die Dekorschicht besonders gut herstellt werden. Hierzu genügt es, die erste Schablone auf das Dekor-Trägermaterial aufzulegen und die zweite Kautschukmischung durch die Ausnehmungen der Schablone auf das Dekor-Trägermaterial aufzubringen. Dies kann beispielsweise im Wege des Siebdruckverfahrens bzw. der Serigraphie erfolgen. Auch wenn die Schablone eine begrenzte Länge aufweist, ist die Anbringung einer Dekorschicht auf einem bahnenförmigen Dekor-Trägermaterial möglich, dessen Länge die Länge der Schablone um ein Vielfaches überschreitet. Hierzu kann die erste Schablone nach dem Vorschub des Dekor-Trägermaterials, wobei zum Beispiel das Dekor-Trägermaterial relativ zu der Position, in der die Schablone aufgelegt wird, verschoben wurde, erneut aufgelegt werden, bevor wiederum die zweite Kautschukmischung (oder eine weitere Kautschukmischung) auf das Dekor-Trägermaterial aufgebracht wird. Alternativ oder zusätzlich kann eine konturierte Ausnehmungen aufweisende zweite Schablone aufgelegt werden. Auf diese Weise kann nach und nach das bahnenförmige Dekor-Trägermaterial über seine gesamte Länge mit der Dekorschicht beschichtet werden.

Die zweite Kautschukmischung kann durch Mischen erzeugt und sodann bereitgestellt werden. Entsprechendes gilt ggf. für die weitere Kautschukmischung, die sich beispielsweise in der Farbe von der zweiten Kautschukmischung unterscheiden kann. Dabei wird die Viskosität der Kautschukmischung jeweils so eingestellt, dass die zweite Kautschukmischung (bzw. die weitere Kautschukmischung) durch die Ausnehmungen der Schablone auf das Dekor-Trägermaterial aufgebracht und insbesondere aufgestrichen werden kann. Das bahnenförmige Trägermaterial kann beispielsweise ein Papier oder eine Folie sein, wobei die Materialien so ausgewählt und/oder ausgerüstet sind, dass sie den Belastungen während der Herstellung, insbesondere auch während der Vulkanisation standhalten.

Erfindungsgemäß ist besonders bevorzugt, wenn das bereitgestellte Dekor-Trägermaterial mit der Dekorschicht hergestellt wurde, indem das erneute Auflegen der ersten Schablone bzw. das Auflegen der zweiten Schablone derart versetzt zu dem ersten Auflegen erfolgt, dass der zweite Abschnitt der Dekorschicht einen Überlappungsbereich mit dem ersten Abschnitt der Dekorschicht aufweist. Dies kann erreicht werden, indem der Vorschub des Dekor-Trägermaterials entsprechend durchgeführt wird. Auf diese Weise lässt sich eine besonders gleichmäßige Gestaltung erreichen. Konturierte Schablonen, so wie sie z.B. beim Siebdruck verwendet werden, erlauben üblicherweise keinen lückenlosen Druck. Durch das erfindungsgemäße Verfahren kann gleichwohl eine lückenlose Gestaltung des Dekors erreicht werden. Dies ist gerade bei der Herstellung von bahnenförmigen Bodenbelägen ein entscheidender Vorteil. In diesem Überlappungsbereich ist sowohl der erste als auch der zweite Abschnitt der Dekorschicht angeordnet. Hierbei kann der zweite Abschnitt auf oder über dem ersten Abschnitt angeordnet sein. Der zweite Abschnitt kann aber im Überlappungsabschnitt auch neben dem ersten Abschnitt angeordnet sein.

Eine weitere bevorzugte Ausführungsform sieht vor, dass das bereitgestellte Dekor-Trägermaterial in wenigstens zwei Durchgängen mit der Dekorschicht versehen wurde. Diese Durchgänge können separat durchgeführt werden, indem zum Beispiel in einem ersten Durchgang, wie zuvor beschrieben, die erste Schablone auf das Dekor-Trägermaterial aufgelegt und die zweite Kautschukmischung mittels der ersten Schablone auf das Dekor-Trägermaterial aufgebracht wird. Daran anschließend kann eine Trocknung dieses Teilbereichs der Dekorschicht durchgeführt werden. Die Trocknung hat den Vorteil, dass im nachfolgenden Durchgang zuvor aufgebrachte Teilbereiche der Dekorschicht nicht mehr verwischt werden können. In dem zweiten Durchgang wird dann unter Verwendung der ersten Schablone (oder der zweiten bzw. einer weiteren Schablone) ein weiterer Teilbereich der Dekorschicht auf das Dekor-Trägermaterial aufgebracht. Verwendet wird hierbei die zweite Kautschukmischung oder die weitere Kautschukmischung. Auf diese Weise kann z.B. besonders effektiv eine nahtlos durchgehende Dekorschicht hergestellt werden. Auch wenn im ersten Durchgang zwischen zwei nacheinander aufgebrachten Abschnitten der Dekorschicht aus technischen Gründen ein Zwischenbereich ohne Dekorschicht freibleibt, kann dieser Bereich im zweiten Durchgang bedruckt werden.

Eine besonders bevorzugte Ausführungsform sieht vor, dass das bereitgestellte Dekor-Trägermaterial mit der Dekorschicht hergestellt wurde unter Verwendung der bereitgestellten zweiten Kautschukmischung, wobei die zweite Kautschukmischung vor dem Aufbringen auf das Dekor-Trägermaterial mit einem Lösungsmittel versetzt wurde, und die zweite Kautschukmischung nach dem Aufbringen auf das Dekor-Trägermaterial getrocknet wurde. Auf diese Weise kann eine besonders geringe Viskosität der zweiten Kautschukmischung erreicht werden, welche das Aufbringen mittels Schablone erleichtert und es ermöglicht, eine besonders gleichbleibende Qualität und Dicke der Dekorschicht zu erreichen. Das Trocken kann vorzugsweise unter Zufuhr von Wärme erfolgen.

Vorteilhafter Weise ist vorgesehen, dass die Dekorschicht einen verstärkenden Füllstoff, wie z.B. Kieselsäure enthält. Auf diese Weise wird nicht nur die Haltbarkeit der Dekorschicht verbessert, sondern es wird auch die Bildung eines festen Verbundes mit dem Elastomer-Flächengebilde erleichtert. Hierbei wird eine weitere Verbesserung erreicht, wenn der verstärkende Füllstoff silanisiert ist. Die Silanisierung kann im Nassverfahren, im Trockenverfahren oder nach dem In-Situ-Verfahren während des Mischprozesses der zweiten Kautschukmischung erfolgen.

Nach einer besonders bevorzugten Ausführungsform der Erfindung ist vorgesehen, dass die auf dem Dekor-Trägermaterial bereitgestellte Dekorschicht kein Vernetzungssystem enthält. Auf diese Weise wird die Herstellung weiter vereinfacht. Das Dekor-Trägermaterial mit der Dekorschicht kann auf diese Weise erheblich länger gelagert werden. Dies ermöglicht es, das Dekor-Trägermaterial auch längere Zeit zu lagern, ohne dass die Qualität des Produktes abnimmt.

Eine weitere Verbesserung sieht vor, dass die erste Kautschukmischung ein Vernetzungssystem enthält, und dass das Vernetzungssystem der ersten Kautschukmischung nach dem Aufbringen des mit der Dekorschicht versehenen Dekor-Trägermaterials auf das Kautschuk-Flächengebilde aus dem Kautschuk-Flächengebilde in die Dekorschicht diffundiert. Auf diese Weise wird erreicht, dass während der Vulkanisation des Kautschuk-Flächengebildes die Dekorschicht problemlos mitvulkanisiert wird. Erhöhte Temperaturen vor oder während der Vulkanisation beschleunigen dabei die Diffusion.

Erfindungsgemäß wird weiterhin bevorzugt, dass die zweite Kautschukmischung wenigstens ein Pigment enthält. Auch die erste Kautschukmischung kann ein Pigment enthalten. Vorzugsweise enthalten die erste und die zweite Kautschukmischung unterschiedliche Pigmente und/oder unterschiedliche Mengen desselben Pigments.

Nach einer vorteilhaften Ausgestaltung der Erfindung ist vorgesehen, dass die Dicke der Dekorschicht zwischen 0,01 mm und 0,5 mm beträgt, vorzugsweise zwischen 0,015 mm und 0,05 mm. Dies hat sich bei der Herstellung bewährt und trägt zudem zu einer guten Haltbarkeit des Bodenbelages bei.

Erfindungsgemäß ist weiterhin vorgesehen, dass der Abrieb gemessen nach ISO 4649 der Dekorschicht nach der Vulkanisation weniger als 250mm³ beträgt, vorzugsweise weniger als 180 mm³. Der Abrieb, beziehungsweise die Abriebbeständigkeit, wird hierbei nach dem in ISO 4649 genannten Verfahren A mit einer Auflast von 5 N ermittelt.

Die Erfindung betrifft darüber hinaus einen Bodenbelag, erhältlich durch das vorbeschriebene Verfahren. Ein solcher Bodenbelag ist insbesondere für die Verwendung in Gebäuden geeignet.

Im Rahmen der Erfindung wird weiterhin das nachfolgend beschriebene bevorzugt:

Die erste Kautschukmischung, die zweite Kautschukmischung und/oder die weitere Kautschukmischung kann wenigstens einen Kautschuk, ausgewählt aus der Gruppe bestehend aus: NR (Naturkautschuk), BR (Polybutadien), IR (Polyisopren), SBR (Styrol-Butadien-Kautschuk), NBR (Acrylnitril-Butadien-Kautschuk, EPM (Ethylen-Propylen-Kautschuk), EPDM (Ethylen-Propylen-Dien-Kautschuk), IIR (Butylkautschuk), CR (Chloroprenkautschuk), IR (Polyisopren) enthalten. Besonders bevorzugt sind dabei SBR, NBR, NR und EPDM sowie Mischungen hiervon.

Die erste Kautschukmischung, die zweite Kautschukmischung und/oder die weitere Kautschukmischung kann wenigstens einen Füllstoff, ausgewählt aus der Gruppe bestehend aus: Kieselsäure, Kreide, Kaolin, Kieselerde, Magnesiumsilikat, Aluminiumoxidhydrat, Aluminiumsilikat, Calciumcarbonat, Magnesiumcarbonat, Calciumsilikat, Magnesiumsilikat, Bariumsulfat, Zinkcarbonat, Kaolin calciniert, Calciumoxid, Magnesiumoxid, Titandioxid, Aluminiumoxid, silanisiertes Kaolin, silanisiertes Silikat enthalten. Besonders bevorzugt sind hierbei helle Füllstoffe, da diese sich für eine Einfärbung besser eignen. Ein heller Füllstoff schließt insbesondere Ruß aus. Dies bedeutet jedoch nicht, dass die jeweilige Kautschukmischung neben einem hellen Füllstoff nicht auch eine gewisse Menge Ruß aufweisen könnte. Besonders bevorzugte Füllstoffe sind: Kieselsäure, Kieselerde und/oder Kaolin. Diese Füllstoffe eignen sich besonders für die kombinierte Verwendung mit Pigmenten.

Die erste Kautschukmischung kann wenigstens ein Vernetzungssystem enthalten. Besonders geeignet ist eine Vernetzung mit Schwefel. Hierzu kann Schwefel oder ein Schwefelspender eingesetzt werden. Als Vernetzungsmittel eignen sich darüber hinaus Peroxide. Das Vernetzungssystem kann darüber hinaus einen Vernetzungsbeschleuniger aufweisen. Der Fachmann wird je nach dem eingesetzten Kautschuk eines der geeigneten bekannten Vernetzungssysteme auswählen. Das Vernetzungssystem kann ein Vernetzungsadditiv aufweisen, das eine Anbindung des Polymers an den bzw. die Füllstoffe gewährleitet. Ein solches Vernetzungsadditiv kann insbesondere ein Silan enthalten.

Das Vulkanisieren des Kautschuk-Flächengebildes kann unter Einwirkung von Wärme und Druck erfolgen. Wenn das Kautschuk-Flächengebilde als Kautschukbahn ausgebildet ist, kann das Vulkanisieren beispielsweise in einer automatischen Vulkanisationsmaschine AUMA erfolgen.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der Erfindung, auch unabhängig von der Zusammenfassung in einzelnen Ansprüchen oder deren Rückbeziehungen.

In der Zeichnung zeigen
- Fig. 1: schematisch das Herstellungsverfahren des Elastomer-Bodenbelags
- Fig. 2: schematisch eine erste Ausführungsform des Dekor-Trägermaterials
- Fig. 3: schematisch die Beschichtung des Dekor-Trägermaterials aus Fig. 2 mittels einer Schablone
- Fig. 4: schematisch eine zweite Ausführungsform des Dekor-Trägermaterials
- Fig. 5: schematisch die Beschichtung des Dekor-Trägermaterials aus Fig. 4 mittels einer Schablone
- Fig. 6a und 6b: schematisch die Beschichtung des Dekor-Trägermaterials in mehreren Durchgängen.

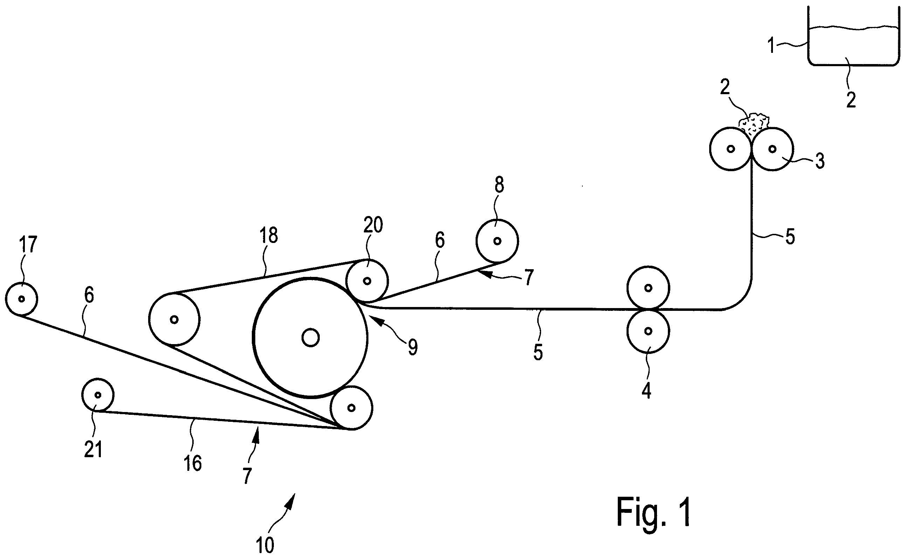

Fig. 1 zeigt schematisch das Herstellungsverfahren eines Elastomer-Bodenbelages. In einem Behälter 1 wird eine erste Kautschukmischung 2 bereitgestellt. Diese wird durch Mischen der Bestandteile der Kautschukmischung in einem Mischer hergestellt. Die Kautschukmischung 2 kann beispielsweise nach folgendem Rezept hergestellt werden:

| **Bestandteile** | **Gewichtsanteil** |
|---|---|
| gefällte Kieselsäure | 30,000 |
| Kieselerde | 160,000 |
| SBR mit 23% Styrolgehalt | 75,000 |
| SBR mit 70% Styrolgehalt | 10,000 |
| Zinkoxid | 3,740 |
| Polyethylenglykol | 1,000 |
| Stearinsäure | 1,000 |
| Paraffin | 1,000 |
| Schwefel | 2,500 |
| Cyclohexylbenzthiazylsulfenamid | 2,000 |
| Tetrametyhldiuramdisulfid | 1,300 |
| Bis(triethoxysilylpropyl)tetrasulfid | 1,000 |

Darüber hinaus kann der ersten Kautschukmischung ein Pigment (oder eine Pigmentmischung) zugegeben werden, um die Kautschukmischung wie gewünscht einzufärben.

Die Mischungsbestandteile können mit geeigneten Mischvorrichtungen bearbeitet werden, bis eine homogene Kautschukmischung vorliegt.

Ein Formgeben der ersten Kautschukmischung kann durch Kalandrieren mittels Walzen 3, 4 erfolgen. Hierzu wird die Kautschukmischung 2 zwischen die Walzen 3 eingebracht. Auf diese Weise kann ein Kautschuk-Flächengebilde 5 erzeugt werden. Das Kautschukflächengebilde 5 kann bahnenförmig ausgebildet sein. Auf diese Weise kann insbesondere eine kontinuierliche Kautschukbahn erzeugt werden. Die Kautschukbahn wird durch weitere Walzen 4 auf die gewünschte Dicke gebracht. Die Darstellung der Walzen 3, 4 ist dabei in Fig. 1 schematisch und soll lediglich das Herstellungsprinzip verdeutlichen.

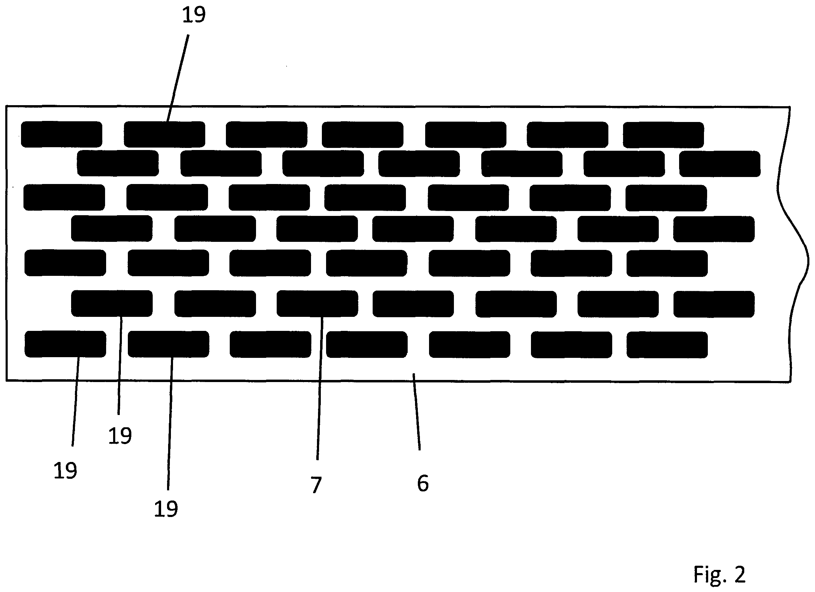

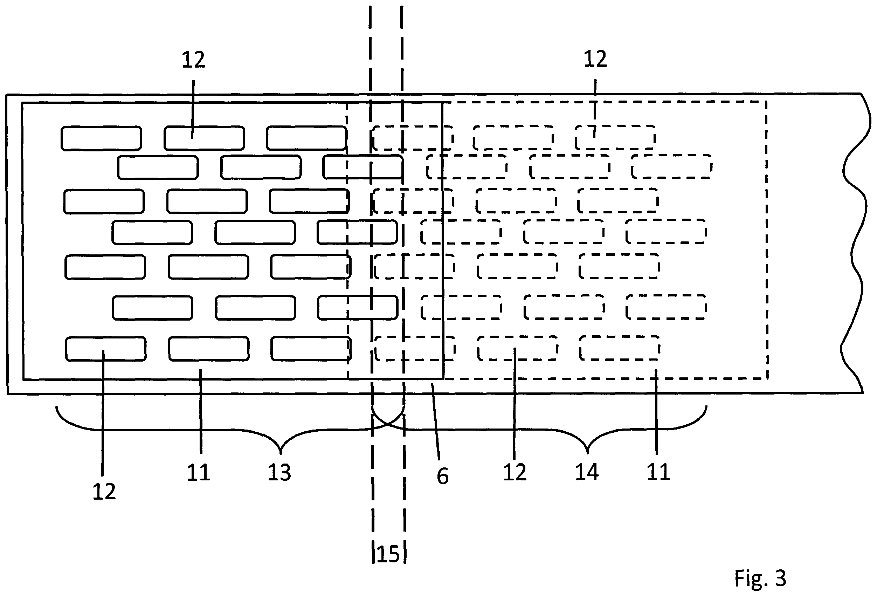

Weiterhin ist vorgesehen, dass ein Dekor-Trägermaterial 6 bereitgestellt wird, das bereichsweise mit einer Dekorschicht 7 (vgl. auch Fig. 2 und 3) versehen ist. Die Dekorschicht 7 enthält eine zweite Kautschukmischung.

Bei dem schematisch dargestellten Ausführungsbeispiel wird das Dekor-Trägermaterial 6 mit der Dekorschicht 7 auf einer Rolle 8 bereitgestellt. Diese ist drehbar gelagert, so dass das Dekor-Trägermaterial 6 von dieser abgewickelt werden kann.

In dem Bereich 9 wird das mit der Dekorschicht 7 versehene Dekor-Trägermaterial 6 auf das Kautschuk-Flächengebilde 5 aufgebracht. Hierbei ist die Dekorschicht 7 auf der zu dem Kautschuk-Flächengebilde 5 weisenden Seite des Dekor-Trägermaterials 6 angeordnet. Die Dekorschicht 7 kommt daher mit den Kautschuk-Flächengebilde 5 flächig in Berührung.

Das Kautschuk-Flächengebilde 5 mit dem aufgelegten Dekor-Trägermaterial 6 wird bei dem dargestellten Ausführungsbeispiel kontinuierlich in eine automatische Vulkanisationsanlage 10 eingeführt. Durch die Walze 20 der Vulkanisationsanlage 10 wird das Dekor-Trägermaterial 6 gegen das Kautschuk-Flächengebilde 5 gedrückt. In der Vulkanisationsanlage 10 wird das Kautschuk-Flächengebilde 5 mit der darauf liegenden Dekorschicht 7 dann vulkanisiert. Die Vulkanisation erfolgt unter Zufuhr von Wärme und unter Aufbringen von mechanischem Druck, durch den das Dekor-Trägermaterial 6 und insbesondere die darauf angeordnete Dekorschicht 7 fest gegen das Kautschuk-Flächengebilde 5 gepresst wird. Hierzu weist die Vulkanisationsanlage 10 ein Metallband 18 auf. Bei der Vulkanisation verbinden sich das Kautschuk-Flächengebilde 5 und die Dekorschicht 7 durch chemisches Vernetzen. Der sich ergebende Elastomer-Bodenbelag 16 ist nun dauerhaft mit der Dekorschicht 7 versehen und kann auf eine Rolle 21 aufgewickelt werden.

Nach dem Vulkanisieren wird das Dekor-Trägermaterial 6 von dem Kautschuk-Flächengebilde 5 abgenommen und auf eine Rolle 17 aufgewickelt. Die Dekorschicht 7 befindet sich jetzt nicht mehr auf dem Dekor-Trägermaterial 6, sondern hat sich mit dem Kautschuk-Flächengebilde 5 zu dem vulkanisierten Elastomer-Bodenbelag 16 verbunden.

Das bereit gestellte Dekor-Trägermaterial 6 mit der Dekor-Schicht 7 kann erfindungsgemäß wie folgt hergestellt werden. Es wird ein insbesondere bahnenförmiges Dekor-Trägermaterial bereitgestellt. Hierbei kann es sich insbesondere um eine Folie, ein Papier oder einen Vliesstoff handeln. Das jeweilige Material kann beschichtet sein, damit es nach dem Vulkanisieren problemlos von dem Bodenbelag 16 gelöst werden kann. Das bahnenförmige Dekor-Trägermaterial 6 kann beispielsweise auf einer Rolle bereitgestellt werden.

Weiterhin wird die zweite Kautschukmischung bereitgestellt. Die zweite Kautschukmischung ist auf die erste Kautschukmischung abgestimmt, so dass sich nach dem Vulkanisieren ein guter Verbund zwischen Dekorschicht 7 und dem Kautschuk-Flächengebilde 5 ergibt. Hierzu kann die zweite Kautschukmischung wenigstens ein Kautschuk-Polymer aufweisen, das auch in der ersten Kautschukmischung enthalten ist. Bevorzugt wird dabei, dass die erste und die zweite Kautschukmischung dieselben Polymere aufweist. Eine gute Verbindung zwischen Dekorschicht 7 und Kautschuk-Flächengebilde 5 wird insbesondere dann erreicht, wenn die erste und die zweite Kautschukmischung nach derselben Rezeptur hergestellt sind. Die zweite Kautschukmischung kann ein Pigment oder eine Pigmentmischung aufweisen, um die zweite Kautschukmischung einzufärben. Wenn für die zweite Kautschukmischung ein andersfarbiges Pigment oder eine andere Pigmentmischung verwendet wird als für die erste Kautschukmischung, kann ein farbiger Kontrast zwischen der Dekorschicht und dem Kautschuk-Flächengebilde erreicht werden. Darüber hinaus kann vorgesehen sein, dass die erste und die zweite Kautschukmischung dasselbe Pigment oder dieselbe Pigmentmischung in unterschiedlichen Konzentrationen enthalten.

Die Verarbeitung wird dadurch erleichtert, dass die zweite Kautschukmischung kein Vernetzungssystem enthält. Dementsprechend werden bei der zweiten Kautschukmischung Vernetzungsmittel, wie Schwefel und Vernetzungsbeschleuniger wie Cyclohexylbenzthiazylsulfenamid und Tetrametyhldiuramdisulfid weggelassen. Dadurch bleiben die zweite Kautschukmischung und die daraus hergestellte Dekorschicht 7 lagerstabil.

Gegebenenfalls kann bei der Erfindung eine weitere Kautschukmischung eingesetzt werden. Vorzugsweise enthält diese dieselben Bestandteile wie die zweite Kautschukmischung. Allerdings können der zweiten und der dritten Kautschukmischung unterschiedliche Pigmente oder Pigmentmischungen zugegeben werden, damit auf diese Weise unterschiedliche Farben der Dekorschicht realisiert werden.

Um das nachfolgende Aufbringen der zweiten bzw. dritten Kautschukmischung zu erleichtern, kann aus der zweiten und gegebenenfalls aus der dritten Kautschukmischung durch Zugabe eines Lösungsmittels jeweils eine Kautschuklösung hergestellt werden, um die Viskosität erheblich herabzusetzen. Da es sich bei der Kautschukmischung um ein Vielstoffgemisch handelt, wird nur das jeweilige Polymer gelöst, während die Füllstoffe in feiner Dispersion vorliegen.

Weiterhin wird wenigstens eine erste Schablone 11 bereitgestellt. Diese weist konturierte Ausnehmungen 12 auf. Die bereitgestellte Schablone kann dabei eine begrenzte Länge aufweisen.

Fig. 2 zeigt einen Abschnitt eines bahnenförmigen Dekor-Trägermaterials 6. Dieses ist bereichsweise mit der Dekorschicht 7 versehen. Bei dem dargestellten Ausführungsbeispiel besteht die Dekorschicht 7 aus einer Vielzahl von nebeneinander angeordneten Feldern 19.

Die Herstellung des in Fig. 2 dargestellten Dekor-Trägermaterials 6 mittels einer ersten Schablone 11 wird schematisch in Fig. 3 dargestellt. Die Schablone 11 weist konturierte Ausnehmungen 12 auf. Deren Form entspricht den Feldern 19 der Dekorschicht 7. Nachdem die Schablone 11 auf das Dekorträgermaterial 6 aufgelegt wurde kann die zweite Kautschukmischung auf das Dekor-Trägermaterial 6 durch die Ausnehmungen 12 der Schablone 11 aufgebracht werden, beispielsweise indem die zweite Kautschukmischung mit einem Rakel über die Schablone gestrichen wird. Auf diese Weise wird ein erster Abschnitt 13 der Dekorschicht 7 gebildet.

Nachfolgend kann die erste Schablone 11 erneut, jedoch versetzt zu ihrer ersten Position, auf das Dekor-Trägermaterial 6 aufgelegt werden. Diese Position der Schablone 11 ist in Fig. 3 gestrichelt dargestellt. Alternativ ist es möglich eine zweite Schablone (nicht dargestellt) aufzulegen, die ebenfalls mit konturierten Ausnehmungen versehen ist. In diesem Fall kann je nach dem gewünschten Dekor die erste Schablone 11 und die zweite Schablone mit identischen oder unterschiedlichen Ausnehmungen 12 versehen sein. Nach dem erneuten Auflegen der ersten Schablone 11 (bzw. dem Auflegen der zweiten Schablone) wird die zweite Kautschukmischung oder die weitere Kautschukmischung auf das Dekor-Trägermaterial 6 durch die Ausnehmungen 12 der ersten Schablone 11 (bzw. die Ausnehmungen der zweiten Schablone) auf das Dekor-Trägermaterial 6 aufgebracht. Auf diese Weise entsteht ein zweiter Abschnitt 14 der Dekorschicht 7.

Das erneute Auflegen der ersten Schablone 11 (bzw. das Auflegen der zweiten Schablone) erfolgt dabei versetzt zu dem ersten Auflegen der ersten Schablone 11. Indem das Auflegen wiederholt wird, kann nach und nach das bahnenförmige Dekor-Trägermaterial 6 über seine gesamte Länge mit der Dekorschicht 7 versehen werden. Darüber hinaus kann der zweite Abschnitt 14 der Dekorschicht 7 ein Überlappungsbereich 15 mit dem ersten Abschnitt 13 aufweisen. Dies ist in Fig. 3 dargestellt. Auf diese Weise kann eine durchgehende Dekorschicht 7 erreicht werden, obwohl die Schablone 11 einen umlaufenden Randbereich aufweist, in dem keine Ausnehmungen 12 vorgesehen sind. Die Erfindung ist nicht auf eine Verwendung nur einer zweiten und einer dritten Kautschukmischung beschränkt. Vielmehr können beim nachfolgenden erneuten Auflegen der Schablone ggf. auch weitere Kautschukmischungen verwendet werden. Genauso ist die Verwendung von weiteren Schablonen möglich.

Nach dem Aufbringen der zweiten Kautschukmischung bzw. der dritten Kautschukmischung erfolgt eine Trocknung, um die Lösungsmittel wieder auszutreiben. Übrig bleibt beim Trocknen eine Dekorschicht 7, die hinreichend stabil ist, dass das Dekor-Trägermaterial 6 mit der Dekorschicht 7 transportiert und gelagert werden kann. Vorzugsweise wird das Dekor-Trägermaterial 6 dabei aufgerollt.

Die spätere Verbindung von Dekorschicht 7 und Kautschuk-Flächengebilde 5 sowie die Haltbarkeit werden dadurch begünstigt, dass die Dekorschicht 7 einen verstärkenden Füllstoff enthält. Dieser kann vorzugsweise silanisiert sein.

Die zweite und gegebenenfalls die weitere Kautschukmischung enthalten kein Vernetzungssystem. Demzufolge enthält auch die Dekorschicht 7 kein Vernetzungssystem. Auf diese Weise ist sie lagerstabil und kann lange vor der Herstellung des eigentlichen Bodenbelages vorfabriziert werden. In der ersten Kautschukmischung ist hingegen ein Vernetzungssystem enthalten. Nach dem Aufbringen des mit der Dekorschicht 7 versehenden Dekormaterials 6 auf das Kautschuk-Flächengebilde 5 diffundiert das Vernetzungssystem aus dem Kautschuk-Flächengebilde 5 in die Dekorschicht 7. Da die Dekorschicht 7 eine nur geringe Dicke hat, kann die Dekorschicht 7 mit dem Kautschuk-Flächengebilde 5 zusammen vulkanisiert werden. Hierbei verbinden sich die Dekorschicht 7 und das Kautschuk-Flächengebilde 5 dauerhaft durch Vernetzung. Auf diese Weise wird eine Ablösung der Dekorschicht 7 nach dem Vulkanisieren sicher vermieden.

Die Dekorschicht wird in einer Dicke zwischen 0,01 mm und 0,5 mm, vorzugsweise in einer Dicke zwischen 0,015 mm und 0,05 mm aufgebracht.

Der Abrieb der Dekorschicht gemessen nach ISO 4649 beträgt nach der Vulkanisation weniger als 250 mm³, vorzugsweise weniger als 180 mm³.

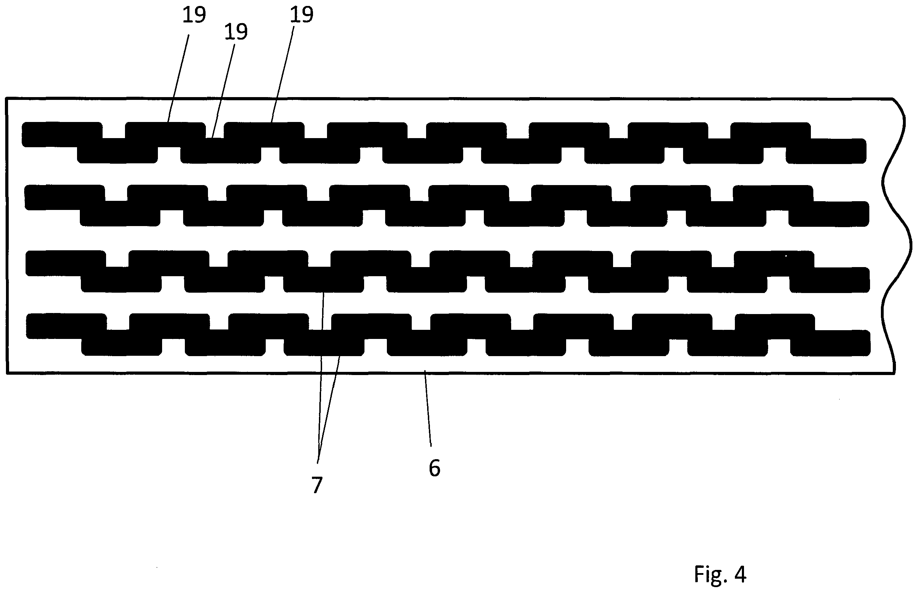

Fig. 4 zeigt eine weitere Ausführungsform eines erfindungsgemäßen Dekor-Trägermaterials 6. Wiederum ist gut die Dekorschicht 7 zu erkennen, die auf das Dekor-Trägermaterial 6 aufgebracht ist. Die Dekorschicht weist eine Vielzahl von Feldern 19 auf. Die Felder 19 sind dabei versetzt zueinander, jedoch so angeordnet, dass jedes Feld 19 in zwei benachbarten Felder 19 übergeht.

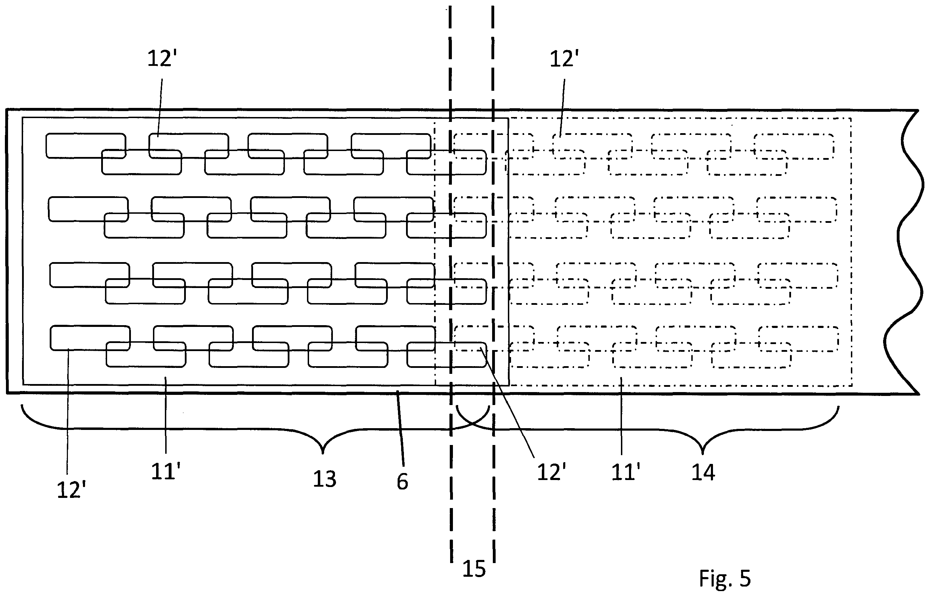

Fig. 5 veranschaulicht die Herstellung der Dekorschicht 7 mittels einer Schablone 11'. Die Schablone 11' weist wiederum Ausnehmungen 12' auf, welche den Feldern 19 entsprechen. Aus Gründen der einfacheren Darstellung ist dabei jeweils die Lage der Felder 19 eingezeichnet. Tatsächlich ist die Ausnehmung 12' dort, wo zwei Felder 19 ineinander übergehen, durchgehend ausgebildet. Mittels der Schablone 11' wird zunächst die zweite Kautschukmischung in einem ersten Bereich 13 auf das Dekor-Trägermaterial 6 aufgebracht. Die Schablone 11' wird daran anschließend erneut, jedoch versetzt auf das Dekor-Trägermaterial aufgelegt. Diese Position ist in Fig. 5 gestrichelt dargestellt. Jetzt kann in dem zweiten Bereich 14 die zweite Kautschukmischung (oder eine weitere Kautschukmischung) durch die Ausnehmungen 12' aufgebracht werden. Wie dargestellt, weisen der erste und der zweite Bereich 13, 14 wiederum einen Überlappungsbereich 15 auf. Bei diesem Ausführungsbeispiel ist die Ausnehmung 12' derart angeordnet, dass diese bereichsweise über einem in dem vorherigen Durchgang erzeugten Feld 19 angeordnet ist. In diesem Bereich wird die Dekorschicht 7 demnach durch zwei übereinanderliegende Schichten der zweiten (oder ggf. der dritten) Kautschukmischung gebildet.

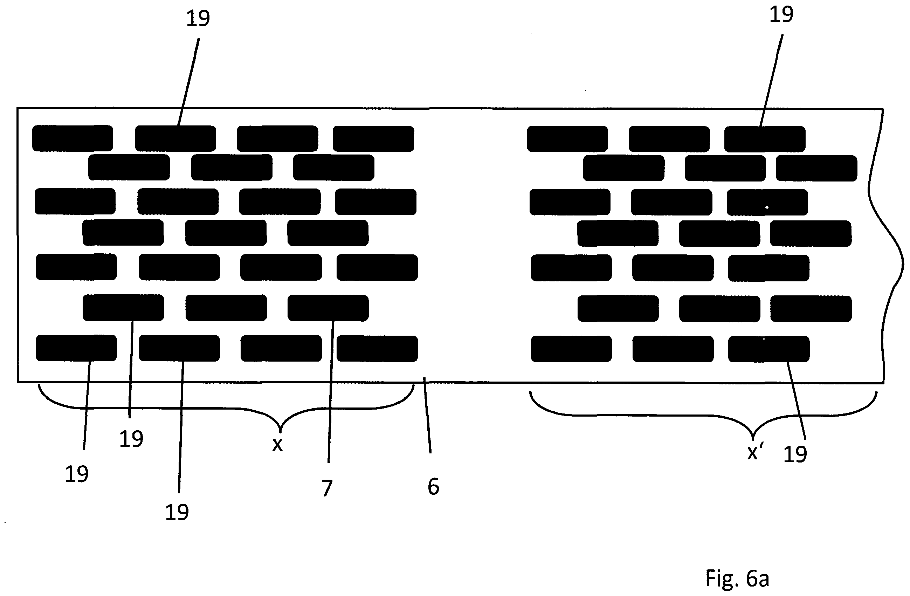

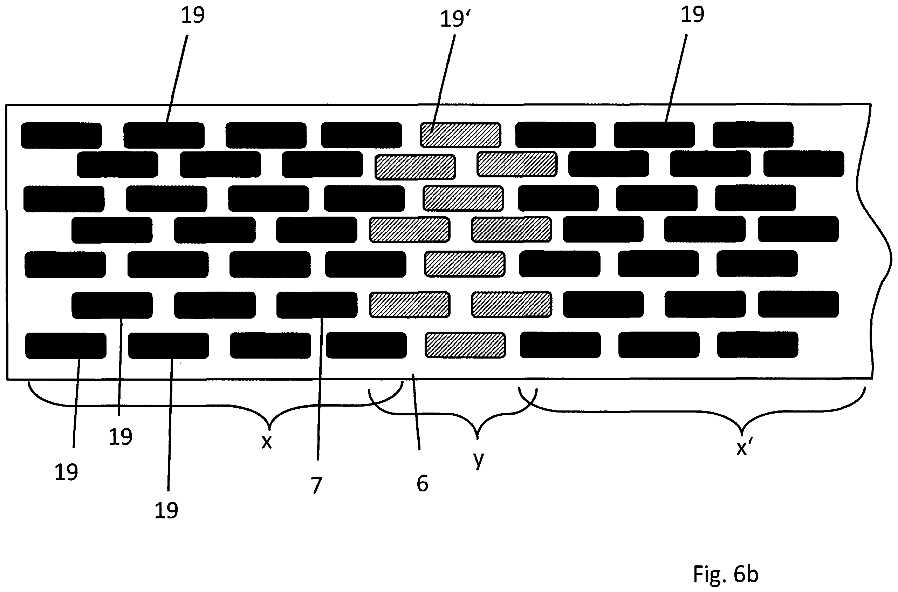

Die Figuren 6a und 6b illustrieren schematisch die Beschichtung des Dekor-Trägermaterials 6 mit der Dekorschicht 7 in mehreren Durchgängen. Zunächst werden in einem ersten Durchgang erste Teilbereiche X und X' der Dekorschicht 7 hergestellt. Dies ist in Figur 6a dargestellt. Dabei wird in der oben beschriebenen Weise mittels der hier nicht dargestellten ersten Schablone die erste Kautschukmischung durch die Ausnehmungen der ersten Schablone auf das Dekor-Trägermaterial 6 aufgebracht. Hierdurch entstehen in dem Teilbereich X die Felder 19. Darauf wird das Dekorträgermaterial vorgeschoben. Die erste Schablone wird erneut aufgelegt, damit in dem Teilbereich X' die erste Kautschukmischung aufgebracht werden kann, um die Felder 19 in diesem Bereich herzustellen. Durch erneutes Vorschieben und Auflegen der Schablone kann das Dekor-Trägermaterial 6 nach und nach über seine gesamte Länge entsprechend beschichtet werden. Zwischen den Teilbereichen X und X' kann jeweils aus technischen Gründen ein Zwischenbereich Y verbleiben, in dem noch keine Dekorschicht vorhanden ist. Daran anschließend wird die soweit erstellte Dekorschicht 7 getrocknet.

Darauf folgt ein zweiter Durchgang. In dem zweiten Durchgang werden zweite Teilbereiche Y der Dekorschicht 7 hergestellt. Hierzu wird eine zweite Schablone (nicht dargestellt) so auf das Dekor-Trägermaterial aufgelegt und die zweite Kautschukmischung (oder eine weitere Kautschukmischung) durch die Ausnehmungen der Schablone auf das Dekor-Trägermaterial 6 aufgebracht, um in dem Zwischenbereich Y die Felder 19' zu erzeugen (vgl. Figur 6b). Die Felder 19' sind dabei wie die Felder 19 ausgebildet. Zur deutlicheren Darstellung sind die in dem zweiten Durchgang erzeugten Felder 19' in Figur 6b schraffiert dargestellt. Durch Vorschub des Dekor-Trägermaterials 6 und erneutes Auflegen der zweiten Schablone können nach und nach die jeweils zwischen zwei Teilbereichen X, X' liegenden Teilbereiche Y hergestellt werden. Daran anschließend werden die im zweiten Durchgang erzeugten Felder 19' getrocknet.

Auf diese Weise kann auch dann, wenn aus technischen Gründen im ersten Durchgang der Teilbereich Y nicht mit der Dekorschicht 7 versehen werden kann, in dem zweiten Durchgang in dem Teilbereich Y die Dekorschicht 7 ergänzt werden. Dies ermöglicht es, auch unter diesen Gegebenheiten eine durchgehende Dekorschicht 7 zu erzielen. Dabei ist das dargestellte Muster nur als Illustrationsbeispiel zu sehen. Tatsächlich können auf diese Weise eine Vielzahl von unterschiedlichen Mustern hergestellt werden.

Hierbei ist es möglich, dass, wie in dem in den Figuren 6a und 6b dargestellten Ausführungsbeispiel, der im zweiten Durchgang hergestellte Teilbereich Y ein Zwischenbereich ist. Es kann vorgesehen sein, dass der im zweiten Durchgang hergestellte Teilbereich Y ganz oder teilweise mit einem im ersten Teilbereich hergestellten Teilbereich X bzw. X' überlappt.

## Patentansprüche

1. Verfahren zum Herstellen eines Elastomer-Bodenbelags, umfassend folgende Schritte
- Bereitstellen einer ersten Kautschukmischung (2);
- Bereitstellen eines Dekor-Trägermaterials (6), das bereichsweise mit einer Dekorschicht (7) versehen ist, wobei die Dekorschicht (7) eine zweite Kautschukmischung enthält;
- Formgeben der ersten Kautschukmischung (2) durch Überführen in ein Kautschuk-Flächengebilde (5);
- Aufbringen des mit der Dekorschicht (7) versehenen Dekor-Trägermaterials (6) auf das Kautschuk-Flächengebilde (5), wobei die Dekorschicht (7) mit dem Kautschuk-Flächengebilde (5) in Berührung kommt;
- Vulkanisieren des Kautschuk-Flächengebildes (5) mit der darauf aufgebrachten Dekorschicht (7), wobei sich die Dekorschicht (7) mit dem Kautschuk-Flächengebilde (5) verbindet;
- Entfernen des Dekor-Trägermaterials (6).

2. Verfahren nach Anspruch 1, **dadurch gekennzeichnet, dass** die erste Kautschukmischung (2) und die zweite Kautschukmischung wenigstens ein übereinstimmendes Kautschuk-Polymer aufweisen.

3. Verfahren nach Anspruch 1 oder 2, **dadurch gekennzeichnet, dass** die erste Kautschukmischung (2) und die zweite Kautschukmischung dieselben Kautschuk-Polymere aufweisen.

4. Verfahren nach einem der Ansprüche 1 bis 3, **dadurch gekennzeichnet, dass** die Dekorschicht (7) vorab auf das bereitgestellte Dekor-Trägermaterial (6) aufgedruckt wurde, wobei das Aufdrucken insbesondere durch Siebdruck erfolgte.

5. Verfahren nach einem der Ansprüche 1 bis 4, **dadurch gekennzeichnet, dass** das bereitgestellte Dekor-Trägermaterial (6) mit der Dekorschicht (7) hergestellt wurde durch:
- Bereitstellen eines insbesondere bahnenförmigen Dekor-Trägermaterials (6);
- Bereitstellen der zweiten Kautschukmischung für die Dekorschicht (7);
- Bereitstellen wenigstens einer konturierte Ausnehmungen aufweisenden ersten Schablone (11, 11'), wobei die Schablone (11, 11') eine begrenzte Länge aufweist;
- Auflegen der ersten Schablone (11, 11') auf das Dekor-Trägermaterial (6) und Aufbringen der zweiten Kautschukmischung auf das Dekor-Trägermaterial (6) durch die Ausnehmungen (12, 12') der ersten Schablone (11, 11') zur Bildung eines ersten Abschnittes (13) der Dekorschicht (7);
- Vorschub des Trägermaterials;
- Erneutes Auflegen der ersten Schablone (11, 11') oder Auflegen einer konturierte Ausnehmungen aufweisenden zweiten Schablone mit einer begrenzten Länge auf das Dekor-Trägermaterial (6), und Aufbringen der zweiten Kautschukmischung oder einer zusätzlich bereitgestellten weiteren Kautschukmischung auf das Dekor-Trägermaterial (6) durch die Ausnehmungen (12, 12') der ersten Schablone (11, 11') bzw. der zweiten Schablone zur Bildung eines zweiten Abschnittes (14) der Dekorschicht (7).

6. Verfahren nach Anspruch 5, **dadurch gekennzeichnet, dass** das bereitgestellte Dekor-Trägermaterial (6) mit der Dekorschicht (7) hergestellt wurde, indem das erneute Auflegen der ersten Schablone (11, 11') bzw. das Auflegen der zweiten Schablone derart versetzt zu dem ersten Auflegen der ersten Schablone erfolgt, dass der zweite Abschnitt (14) der Dekorschicht (7) einen Überlappungsbereich (15) mit dem ersten Abschnitt (13) der Dekorschicht (7) aufweist.

7. Verfahren nach Anspruch 5 oder 6, **dadurch gekennzeichnet, dass** das bereitgestellte Dekor-Trägermaterial in wenigstens zwei Durchgängen mit der Dekorschicht (7) versehen wurde.

8. Verfahren nach einem der Ansprüche 5 bis 7, **dadurch gekennzeichnet, dass** das bereitgestellte Dekor-Trägermaterial (6) mit der Dekorschicht (7) hergestellt wurde unter Verwendung der bereitgestellten zweiten Kautschukmischung, wobei die zweite Kautschukmischung vor dem Aufbringen auf das Dekor-Trägermaterial (6) mit einem Lösungsmittel versetzt wurde, und die zweite Kautschukmischung nach dem Aufbringen auf das Dekor-Trägermaterial (6) getrocknet wurde.

9. Verfahren nach einem der Ansprüche 1 bis 8, **dadurch gekennzeichnet, dass** die Dekorschicht (7) einen verstärkenden Füllstoff enthält, wobei der verstärkende Füllstoff vorzugsweise silanisiert ist.

10. Verfahren nach einem der Ansprüche 1 bis 9, **dadurch gekennzeichnet, dass** die auf dem Dekor-Trägermaterial (6) bereitgestellte Dekorschicht (7) kein Vernetzungssystem enthält.

11. Verfahren nach einem der Ansprüche 1 bis 10, **dadurch gekennzeichnet, dass** die erste Kautschukmischung (2) ein Vernetzungssystem enthält, und dass das Vernetzungssystem der ersten Kautschukmischung (2) nach dem Aufbringen des mit der Dekorschicht (7) versehenen Dekor-Trägermaterials (6) auf das Kautschuk-Flächengebilde (5) aus dem Kautschuk-Flächengebilde (5) in die Dekorschicht (7) diffundiert.

12. Verfahren nach einem der Ansprüche 1 bis 11, **dadurch gekennzeichnet, dass** die zweite Kautschukmischung wenigstens ein Pigment enthält.

13. Verfahren nach einem der Ansprüche 1 bis 12, **dadurch gekennzeichnet, dass** die Dicke der Dekorschicht (7) zwischen 0,01 mm und 0,5 mm beträgt, vorzugsweise zwischen 0,015 mm und 0,05 mm.

14. Verfahren nach einem der Ansprüche 1 bis 13, **dadurch gekennzeichnet, dass** der Abrieb gemessen nach ISO 4649 der Dekorschicht (7) nach der Vulkanisation weniger als 250mm³ beträgt, vorzugsweise weniger als 180 mm³.

15. Bodenbelag, erhältlich durch das Verfahren nach einem der Ansprüche 1 bis 14.

## Claims

1. Method for manufacturing an elastomer floor covering, comprising the following steps:
- providing a first rubber mixture (2);
- providing a decor carrier material (6) comprising areas with a decor layer (7), wherein the decor layer (7) contains a second rubber mixture;
- shaping the first rubber mixture (2) by converting it to a rubber web (5);
- applying the decor carrier material (6) comprising the decor layer (7) onto the rubber web (5), wherein the decor layer (7) comes in contact with the rubber web (5);
- vulcanizing the rubber web (5) and the decor layer (7) applied to it, wherein the decor layer (7) bonds to the rubber web (5);
- removing the decor carrier material (6).

2. Method according to claim 1, **characterized in that** the first rubber mixture (2) and the second rubber mixture comprise at least one common rubber polymer.

3. Method according to either claim 1 or claim 2, **characterized in that** the first rubber mixture (2) and the second rubber mixture comprise the same rubber polymers.

4. Method according to any of claims 1 to 3, **characterized in that** the decor layer (7) has been printed onto the provided decor carrier material (6) in advance, wherein printing particularly was done by screen printing.

5. Method according to any of claims 1 to 4, **characterized in that** the provided decor carrier material (6) having the decor layer (7) has been manufactured by:
- providing a decor carrier material (6), particularly in sheet form;
- providing the second rubber mixture for the decor layer (7);
- providing at least one first template (11, 11') comprising contoured cutouts, wherein the template (11, 11') has a limited length;
- placing the first template (11, 11') onto the decor carrier material (6) and applying the second rubber mixture to the decor carrier material (6) through the cutouts (12, 12') of the first template (11, 11') to form a first section (13) of the decor layer (7);
- advancing the support material;
- again placing the first template (11, 11') or placing a second template with a limited length and comprising contoured cutouts onto the decor carrier material (6), and applying the second rubber mixture or an additionally provided further rubber mixture to the decor carrier material (6) through the cutouts (12, 12') in the first template (11, 11') or second template to form a second section (14) of the decor layer (7).

6. Method according to claim 5, **characterized in that** the provided decor carrier material (6) with the decor layer (7) has been manufactured **in that** again placing of the first template (11, 11'), or placing of the second template is made offset to the first placing in such a way that the second section (14) of the decor layer (7) has an overlap area (15) with the first section (13) of the decor layer (7).

7. Method according to either claim 5 or claim 6, **characterized in that** the provided decor carrier material has been provided with the decor layer (7) in at least two passes.

8. Method according to any of claims 5 to 7, **characterized in that** the provided decor carrier material (6) with the decor layer (7) has been manufactured by using the second rubber mixture provided, wherein a solvent had been added to the second rubber mixture prior to application to the decor carrier material (6), and wherein the second rubber mixture has been dried after being applied to the decor carrier material (6).

9. Method according to any of claims 1 to 8, **characterized in that** the decor layer (7) contains a reinforcing filler, wherein the reinforcing filler is preferably silanized.

10. Method according to any of claims 1 to 9, **characterized in that** the decor layer (7) provided on the decor carrier material (6) does not contain a cross-linking system.

11. Method according to any of claims 1 to 10, **characterized in that** the first rubber mixture (2) contains a cross-linking system and **in that**, after the decor carrier material (6) provided with the decor layer (7) is applied to the rubber web (5), the cross-linking system of the first rubber mixture (2) diffuses from the rubber web (5) into the decor layer (7).

12. Method according to any of claims 1 to 11, **characterized in that** the second rubber mixture contains at least one pigment.

13. Method according to any of claims 1 to 12, **characterized in that** the thickness of the decor layer (7) is between 0.01 mm and 0.5 mm, preferably between 0.015 mm and 0.05 mm.

14. Method according to any of claims 1 to 13, **characterized in that** the abrasion of the decor layer (7) after vulcanization, measured in accordance with ISO 4649, is less than 250 mm³, preferably less than 180 mm³.

15. Floor covering obtainable by the method according to any of claims 1 to 14.

## Revendications

1. Procédé permettant de fabriquer un revêtement de sol en élastomère, comprenant les étapes suivantes consistant à :
- fournir un premier mélange de caoutchouc (2) ;
- fournir un matériau de support de décoration (6), qui est pourvu par section d'une couche décorative (7), la couche décorative (7) contenant un second mélange de caoutchouc ;
- mettre en forme le premier mélange de caoutchouc (2) en le transformant en une structure plate en caoutchouc (5) ;
- appliquer le matériau de support de décoration (6) pourvu de la couche décorative (7) sur la structure plate en caoutchouc (5), la couche décorative (7) venant en contact avec la structure plate en caoutchouc (5) ;
- vulcaniser la structure plate en caoutchouc (5) avec la couche décorative (7) appliquée sur celle-ci, la couche décorative (7) se reliant à la structure plate en caoutchouc (5) ;
- retirer le matériau de support de décoration (6).

2. Procédé selon la revendication 1, **caractérisé en ce que** le premier mélange de caoutchouc (2) et le second mélange de caoutchouc comportent au moins un polymère de caoutchouc correspondant.

3. Procédé selon la revendication 1 ou 2, **caractérisé en ce que** le premier mélange de caoutchouc (2) et le second mélange de caoutchouc comportent les mêmes polymères de caoutchouc.

4. Procédé selon l'une des revendications 1 à 3, **caractérisé en ce que** la couche décorative (7) a d'abord été imprimée sur le matériau de support de décoration (6) fourni, l'impression ayant été effectuée en particulier par sérigraphie.

5. Procédé selon l'une des revendications 1 à 4, **caractérisé en ce que** le matériau de support de décoration (6) fourni comportant la couche décorative (7) a été fabriqué par :
- la fourniture d'un matériau de support de décoration (6) en particulier en forme de bande ;
- la fourniture du second mélange de caoutchouc pour la couche décorative (7) ;
- la fourniture d'au moins un premier pochoir (11, 11') présentant des évidements dotés de contours, le pochoir (11, 11') présentant une longueur limitée ;
- la pose du premier pochoir (11, 11') sur le matériau de support de décoration (6) et l'application du second mélange de caoutchouc sur le matériau de support de décoration (6) à travers les évidements (12, 12') du premier pochoir (11, 11') pour former une première partie (13) de la couche décorative (7) ;
- l'avance du matériau de support ;
- de nouveau la pose du premier pochoir (11, 11') ou la pose d'un second pochoir comportant des évidements dotés de contours avec une longueur limitée sur le matériau de support de décoration (6), et l'application du second mélange de caoutchouc ou d'un autre mélange de caoutchouc fourni en plus sur le matériau de support de décoration (6) à travers les évidements (12, 12') du premier pochoir (11, 11') ou du second pochoir pour former une seconde partie (14) de la couche décorative (7).

6. Procédé selon la revendication 5, **caractérisé en ce que** le matériau de support de décoration (6) fourni comportant la couche décorative (7) a été fabriqué **en ce que** la nouvelle pose du premier pochoir (11, 11') ou la pose du second pochoir est effectuée de manière décalée par rapport à la première pose du premier pochoir de telle manière que la seconde partie (14) de la couche décorative (7) présente une zone de chevauchement (15) avec la première partie (13) de la couche décorative (7).

7. Procédé selon la revendication 5 ou 6, **caractérisé en ce que** le matériau de support de décoration (6) fourni a été pourvu de la couche décorative (7) en au moins deux passages.

8. Procédé selon l'une des revendications 5 à 7, **caractérisé en ce que** le matériau de support de décoration (6) fourni comportant la couche décorative (7) a été fabriqué en utilisant le second mélange de caoutchouc fourni, un solvant ayant été ajouté au second mélange de caoutchouc avant l'application sur le matériau de support de décoration (6), et le second mélange de caoutchouc ayant été séché après l'application sur le matériau de support de décoration (6).

9. Procédé selon l'une des revendications 1 à 8, **caractérisé en ce que** la couche décorative (7) contient une matière de remplissage de renforcement, la matière de remplissage de renforcement étant de préférence silanisée.

10. Procédé selon l'une des revendications 1 à 9, **caractérisé en ce que** la couche décorative (7) fournie sur le matériau de support de décoration (6) ne contient pas de système de réticulation.

11. Procédé selon l'une des revendications 1 à 10, **caractérisé en ce que** le premier mélange de caoutchouc (2) contient un système de réticulation, et **en ce que** le système de réticulation du premier mélange de caoutchouc (2) se diffuse de la structure plate en caoutchouc (5) à la couche décorative (7) après l'application du matériau de support de décoration (6) pourvu de la couche décorative (7) sur la structure plate en caoutchouc (5).

12. Procédé selon l'une des revendications 1 à 11, **caractérisé en ce que** le second mélange de caoutchouc contient au moins un pigment.

13. Procédé selon l'une des revendications 1 à 12, **caractérisé en ce que** l'épaisseur de la couche décorative (7) est comprise entre 0,01 mm et 0,5 mm, de préférence entre 0,015 mm et 0,05 mm.

14. Procédé selon l'une des revendications 1 à 13, **caractérisé en ce que** l'abrasion de la couche décorative (7) après la vulcanisation, mesurée selon ISO 4649, est inférieure à 250 mm³, de préférence inférieure à 180 mm³.

15. Revêtement de sol, pouvant être obtenu par le procédé selon l'une des revendications 1 à 14.
